# FASCICULE DE BREVET EUROPEEN

(11) **EP 2 646 395 B1**
(45) Date de publication et mention de la délivrance du brevet: **25.04.2018**
(21) Numéro de dépôt: 11799853.4
(22) Date de dépôt: 29.11.2011
(51) Int. Cl.: C04B 35/484, H01M 8/10, H01M 4/38, C04B 35/486, C04B 35/645, C04B 35/626, C04B 35/653

(54) **POUDRE DE ZIRCONE YTTRIEE FONDUE**
GESCHMOLZENES PULVER AUS YTTRIUM-STABILISIERTEM ZIRKONOXID
MOLTEN POWDER OF YTTRIA-STABILISED ZIRCONIA

(30) Priorité: 29.11.2010 FR 1059836
(43) Date de publication de la demande: 09.10.2013
(73) Titulaire: Saint-Gobain Centre de Recherches et d'Etudes Européen, 92400 Courbevoie (FR)
(72) Inventeur: LEVY, Caroline, F-34070 Montpellier (FR); MARLIN, Samuel, F-13750 Plan D'orgon (FR)
(74) Mandataire: Nony
(86) Numéro de dépôt international: PCT/IB2011/055358
(87) Numéro de publication internationale: WO 2012/073187

(56) Documents cités:
- WO-A1-2004/112181
- JP-B2- 3 127 582
- US-A- 4 294 795

## Description

### Domaine technique

La présente invention se rapporte à une poudre de zircone yttriée fondue, en particulier pour fabriquer un corps céramique poreux présentant un bon compromis entre résistance mécanique et porosité ouverte, et en particulier un élément d'une pile à combustible à oxyde solide (SOFC), et notamment une anode d'une telle pile.

### Etat de la technique

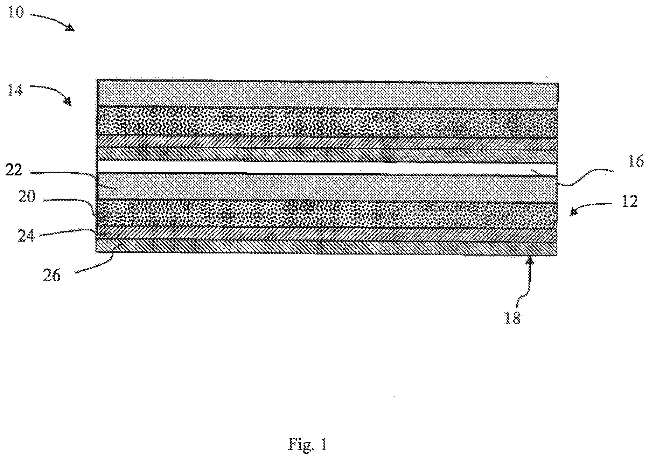

La figure 1 représente schématiquement en coupe un exemple de pile 10 à combustible à oxyde solide (SOFC), fabriquée par un procédé de pressage à chaud. La pile 10 comporte des première et deuxième cellules élémentaires, 12 et 14 respectivement, séparées par une couche d'interconnecteur 16. Les première et deuxième cellules élémentaires étant de structure similaire, seule la première cellule élémentaire 12 est décrite. La première cellule élémentaire 12 comporte successivement une anode 18, une couche d'électrolyte 20 et une cathode 22. L'anode 18 est constituée d'une couche active d'anode 24 (en anglais « anode functional layer », ou AFL), en contact avec la couche d'électrolyte 20, et une couche anode support 26. L'anode 18 est généralement fabriquée par un procédé consistant à déposer sur la couche d'anode support 26, une couche active d'anode 24, par exemple par sérigraphie (en anglais « screen printmg »). A ce stade, les couches 24 et 26 peuvent être à base de précurseur du matériau d'anode final. Une consolidation par frittage est ensuite réalisée.

Des piles à combustible ou des matériaux utilisables pour la fabrication de piles à combustibles sont par exemple décrits dans WO2004/093235, EP 1 796 191, US 2007/0082254, EP 1 598 892 ou EP 0 568 281.

Des cermets poreux de zircone stabilisée à l'oxyde d'yttrium et de nickel (Ni-YSZ) sont couramment utilisés pour fabriquer la couche active d'anode.

Des procédés de fabrication de cermets par fusion ont en particulier été étudiés dans l'article « Structured porous Ni- and Co- YSZ cermets fabricated from directionally sotidified eutectic composites », Journal of the European Ceramic Society - 25 (2005) - pages 1455/1462 et dans l'article intitulé « Stability of Channeled Ni-YSZ Cermets Produced from Self-assembled NiO-YSZ Directionally Solidified Eutectics », dans J. Am. Ceram. Soc. 88 (2005) - pages 3215/3217. Ce dernier article décrit une plaque poreuse en un cermet Ni-YSZ destinée à la fabrication d'une anode de pile à combustible à oxyde solide. Ce cermet présente une structure eutectique lamellaire régulière, résultant de la mise en oeuvre d'un procédé de fusion directionnelle au laser (procédé « laser floating-zone method ».

WO 2004/112181 décrit l'utilisation de zircone stabilisée à l'oxyde d'yttrium comme poudre d'électrolyte.

Alternativement, les cermets peuvent être fabriqués par frittage d'un mélange de grains de zircone yttriée et de particules d'oxyde de nickel ou de cobalt, puis réduction de l'oxyde de nickel en nickel ou de l'oxyde de cobalt en cobalt. Selon deux technologies différentes, les grains de zircone yttriée peuvent être eux-mêmes des grains fondus ou des grains frittés.

Une couche active d'anode doit présenter:
- une porosité ouverte élevée afin de faciliter les réactions de catalyse nécessaires aux performances électriques de la pile SOFC ;
- une résistance mécanique élevée, notamment pour les anodes dites « supportées ».

Ces deux propriétés évoluent généralement en sens opposés.

Pour les couches actives d'anode en cermet, il existe donc un besoin permanent pour optimiser le compromis entre porosité ouverte et résistance mécanique du cermet et notamment du squelette de zircone yttriée, tout en conservant des propriétés de conductivité électrique adaptées à une utilisation dans une pile SOFC.

Un but de l'invention est de répondre à ce besoin.

### Résumé de l'invention

Selon l'invention, on atteint ce but au moyen d'une poudre de grains fondus de zircone yttriée, lesdits grains, dits « grains selon l'invention », présentant l'analyse chimique suivante, en pourcentage massique sur la base des oxydes :
- ZrO₂ + HfO₂ : complément à 100% ; la teneur en HfO2 étant inférieure à 2,0%;
- 11,8% ≤ Y₂O₃ ≤ 18,6%;
- 0,07% ≤ Al₂O₃ ≤ 1,8%;
- TiO₂ ≤ 0,6%, pourvu que 0,5.Al₂O₃ - 0,3% ≤ TiO₂ si 0,6% < Al₂O₃ ;
- Autres oxydes : ≤ 2,0%.

Comme on le verra plus en détail dans la suite de la description, une telle poudre permet de fabriquer, en particulier par mélange avec des particules d'oxyde métallique, mise en forme puis frittage, un corps fritté, et en particulier une anode, bien adapté aux piles à combustible SOFC.

Il est important que les grains selon l'invention soient fondus. En effet, l'utilisation de grains frittés, de grains coprécipités ou de grains fondus détermine les propriétés du cermet. Par exemple Al₂O_{3,} ou Al₂O₃+TiO₂ sont des additifs de frittage classiquement utilisés pour améliorer le frittage de la zircone. Mais lorsqu'ils sont utilisés pour fabriquer des grains frittés, et donc incorporés dans ces derniers, ils conduisent à des réactions avec l'oxyde de nickel et/ou le nickel lors de la fabrication du corps fritté. Il en résulte des phases préjudiciables aux performances électriques de la pile SOFC. Les inventeurs ont cependant découvert que ces additifs, incorporés dans des grains fondus, sont au contraire une source d'amélioration dans cette application.

De manière générale, on ne peut déterminer *a priori* si des propriétés obtenues par l'utilisation de grains frittés ou coprécipités seront conservées si ces grains sont remplacés par des grains fondus.

Il est également important que les grains selon l'invention comportent un minimum d'alumine pour que le produit obtenu après mise en forme et frittage d'une poudre selon l'invention présente un bon compromis entre la porosité ouverte et la résistance mécanique en flexion bi-axiale.

Les grains selon l'invention peuvent encore comporter une ou plusieurs des caractéristiques optionnelles suivants :
- de préférence, la teneur en Y₂O₃ est supérieure à 12,7%, de préférence supérieure à 13,5% et/ou, de préférence, inférieure à 17,8%, de préférence inférieure à 16,9% ;
- de préférence, la teneur en Al₂O₃ est inférieure à 1,7%, de préférence inférieure à 1,6%, de référence inférieure à 1,5%, de préférence inférieure à 1,4%, de préférence inférieure à 1,3%, de préférence inférieure à 1,2%, de préférence inférieure à 1,1%, de préférence inférieure à 1,0%, de préférence inférieure à 0,9%, de préférence inférieure à 0,8%, de préférence inférieure à 0,5%, voire inférieure à 0,4% et/ou de préférence supérieure à 0,1% ;
- de préférence, la teneur en TiO₂ est inférieure à 0,4%, de préférence inférieure à 0,3%, de préférence encore inférieure à 0,2%, et/ou de préférence supérieure à 0,01%, de préférence supérieure à 0,1% (à condition que 0,5.Al₂O₃ - 0,3% ≤ TiO₂ si 0,6% < Al₂O₃);
- de préférence, la teneur en Al₂O₃ est comprise entre 0,1% et 0,5% et la teneur en TiO₂ est comprise entre 0,1% et 0,2% ;
- de préférence, la teneur en « autres oxydes » est inférieure à 1,5%, de préférence inférieure à 1 %, de préférence inférieure à 0,7%, de préférence inférieure à 0,5%, de préférence inférieure à 0,3%, de préférence inférieure à 0,2%, voire inférieure à 0,1%, les propriétés de conductivité électrique et catalytiques en étant avantageusement améliorées ;
- de préférence, les « autres oxydes » sont des impuretés ;
- la teneur en HfO₂ est inférieure à 2,0 %, de préférence inférieure à 1,8%, inférieure à 1,6%, voire inférieure à 1,4 % ;
- de préférence, la silice est une impuretés ; de préférence sa teneur est inférieure à 0,5%, de préférence inférieure à 0,4%, de préférence encore inférieure à 0,3%, de préférence inférieure à 0,2%, de préférence inférieure à 0,1%, voire inférieure à 0,05%, les propriétés de conductivité électrique et catalytiques en étant avantageusement améliorées.

Dans un mode de réalisation, la teneur en Al₂O₃ est supérieure à 0,1%. supérieure à 0,2 %, supérieure à 0,3 %, supérieure à 0,4%, voire supérieure à 0,5 %, supérieure à 0,6 %, ou supérieure à 0,7 %.

Une poudre de grains fondus de zircone yttriée selon l'invention, dite « poudre selon l'invention », peut encore comporter une ou plusieurs des caractéristiques optionnelles suivantes :
- le percentile 90, D₉₀, des grains de la poudre, est inférieur à 200 µm, de préférence inférieur à 180 µm ;
   - dans un premier mode de réalisation particulier, la poudre présente :
      ∘ un percentile 90, D₉₀, inférieur à 150 µm, de préférence inférieur à 130 µm, et/ou
      ∘ une taille médiane D₅₀ comprise entre 65 µm et 85 µm, et/ou
      ∘ une taille minimale D₁₀ supérieure à 30 µm ;
   - dans un deuxième mode de réalisation particulier, la poudre présente :
      ∘ un percentile 90, D₉₀, inférieur à 75 µm, de préférence inférieur à 70 µm, et/ou
      ∘ une taille médiane D₅₀ comprise entre 35 µm et 50 µm, et/ou
      ∘ une taille minimale D₁₀ supérieure à 15 µm, de préférence supérieure à 20 µm ;
   - dans un troisième mode de réalisation particulier, la poudre présente :
      ∘ un percentile 90, D₉₀, inférieur à 40 µm, de préférence inférieur à 35 µm, et/ou
      ∘ une taille médiane D₅₀ comprise entre 10 µm et 25 µm, et/ou
      ∘ une taille minimale D₁₀ supérieure à 3 µm, de préférence supérieure à 5 µm ;
   - dans un quatrième mode de réalisation particulier, la poudre présente :
      ∘ un percentile 90, D₉₀, inférieur à 15 µm, de préférence inférieur à 10 µm, et/ou
      ∘ une taille médiane D₅₀ inférieure à 5 µm.
de préférence, plus de 40 %, de préférence plus de 50 %, de préférence plus de 60 %, de préférence encore plus de 70 % des grains de la poudre, en pourcentages en nombre, présentent un facteur de forme R supérieur à 1,5, le facteur de forme d'un grain étant le rapport *L*/*W* entre la longueur *L* et la largeur *W* dudit grain ;
- la distribution du facteur de forme R est telle que:
   - moins de 90 %, voire moins de 80 % des grains de la poudre présentent un facteur de forme R supérieur à 1,5, et/ou
   - plus de 10%, voire plus de 20 % et/ou moins de 60 %, voire moins de 40 % des grains de la poudre présentent un facteur de forme R supérieur à 2, et/ou
   - plus de 5 %, voire plus de 10 % et/ou moins de 40 %, voire moins de 20 % des grains de la poudre présentent un facteur de forme R supérieur à 2,5, et/ou
   - plus de 2 %, voire plus de 5 % et/ou moins de 20 %, voire moins de 10 % des grains de la poudre présentent un facteur de forme R supérieur à 3, les pourcentages étant des pourcentages en nombre.

L'invention concerne aussi procédé de fabrication d'une poudre selon l'invention comportant les étapes successives suivantes:
a) mélange de matières premières particulaires apportant ZrO₂, Y₂O₃, Al₂O₃, et optionnellement TiO₂, et/ou un ou plusieurs précurseurs de ces oxydes pour former une charge de départ adaptée de manière que, à l'issue de l'étape c), le produit présente une composition conforme à celle d'un grain selon l'invention,
b) fusion de la charge de départ jusqu'à obtention d'une matière en fusion,
c) refroidissement jusqu'à solidification complète de ladite matière en fusion de manière à obtenir un produit fondu,
d) optionnellement, et en particulier si le produit fondu n'est pas une poudre selon l'invention, broyage dudit produit fondu.

L'invention concerne aussi un procédé de fabrication d'un cermet, dit « cermet selon l'invention », comportant les étapes successives suivantes :
A) préparation d'une charge de départ particulaire comportant une poudre selon l'invention et des particules d'oxyde de nickel ou d'oxyde de cobalt et/ou un ou plusieurs précurseurs de ces oxydes ;
B) mise en forme de la poudre préparée à l'étape A) de manière à constituer une préforme;
C) frittage de ladite préforme;
D) réduction de l'oxyde de nickel en nickel ou de l'oxyde de cobalt en cobalt.

La poudre selon l'invention utilisée à l'étape A) peut notamment être fabriquée suivant les étapes a) à d) décrites ci-dessus.

La présente invention se rapporte encore à un cermet fritté obtenu par frittage d'une charge de départ comportant une poudre selon l'invention.

De préférence, un cermet fritté selon l'invention présente une porosité totale, de préférence uniformément répartie, supérieure à 20%, de préférence supérieure à 25%, de préférence supérieure à 30%, de préférence supérieure à 35%.

Le cermet fritté peut être, en particulier, tout ou partie d'une électrode, en particulier une anode, en particulier une couche active d'anode. L'invention concerne également une telle anode et une cellule élémentaire d'une pile à combustible à oxyde solide comportant une électrode, en particulier une anode, selon l'invention, et une telle pile à combustible.

### Définitions

On appelle classiquement « cermet un matériau composite contenant à la fois une phase céramique et une phase métallique. On appelle « précurseur de cermet » un matériau capable, dans des conditions réductrices, de conduire à un cermet selon l'intention. Un précurseur de cermet comporte généralement une phase céramique et une phase en un précurseur d'une phase métallique, c'est-à-dire apte à se transformer en ladite phase métallique dans des conditions réductrices.

Un produit est classiquement dit « fondu » lorsqu'il est obtenu par un procédé mettant en oeuvre une fusion de matières premières et une solidification par refroidissement.

Un précurseur de ZrO₂, de Al₂O₃, de TiO₂ ou de Y₂O₃ est un composé capable de conduire à la formation de ces oxydes par un procédé comportant une fusion, puis une solidification par refroidissement.

Par « taille d'un grain », on entend la taille d'un grain donnée classiquement par une caractérisation de distribution granulométrique réalisée avec un granulomètre laser. Le granulomètre laser peut être, par exemple, un Partica LA-950 de la société HORIBA.

Les percentiles ou « centiles » 10 (D₁₀), 50 (D₅₀), 90 (D₉₀) sont les tailles de grains correspondant aux pourcentages, en masse, de 10%, 50% et 90% respectivement, sur la courbe de distribution granulométrique cumulée des tailles de grains de la poudre, les tailles de grains étant classées par ordre croissant. Par exemple, 10%, en masse, des grains de la poudre ont une taille inférieure à D₁₀ et 90% des grains en masse ont une taille supérieure à D₁₀. Les percentiles peuvent être déterminés à l'aide d'une distribution granulométrique réalisée à l'aide d'un granulomètre laser.

On appelle «taille minimale d'une poudre », le percentile 10 (D₃₀) de ladite poudre.

On appelle « taille médiane d'une poudre », le percentile 50 (D₅₀) de ladite poudre.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de sodium et autres alcalins, fer, vanadium et chrome sont des impuretés si leur présence n'est pas désirée.

« ZrO₂ », « oxyde de zirconium et « zircone » sont des synonymes. Lorsqu'il est fait référence à « ZrO₂ », à l'oxyde de zirconium ou à la zircone, il y a lieu de comprendre (ZrO₂+HfO₂). En effet, un peu de HfO₂, chimiquement indissociable du ZrO₂ et présentant des propriétés semblables, est toujours naturellement présent dans les sources de zircone à des teneurs généralement inférieures à 2%. Autrement dit, « ZrO₂+HfO₂ » signifie ZrO₂ et les traces de HfO₂ naturellement présentes dans les sources de zircone.

Par « Co » et « Ni », on entend le cobalt et le nickel métallique.

On appelle « facteur de forme » R le rapport entre la plus grande dimension apparente, ou « longueur » *L,* et la plus petite dimension apparente, ou « largeur » *W*, d'un grain. La longueur et la largeur d'un grain sont classiquement mesurées par la méthode suivante. Après avoir prélevé un échantillon représentatif des grains de la poudre, ces grains sont partiellement noyés dans de la résine et subissent un polissage apte à rendre possible une observation en surface polie. Les mesures du facteur de forme sont réalisées à partir d'images de ces surfaces polies, ces images étant acquises avec un Microscope Electronique à Balayage (MEB), en électrons secondaires, avec une tension d'accélération de 10 kV et un grandissement de x100 (ce qui représente 1 µm par pixel sur le MEB utilisé). Ces images sont de préférences acquises dans des zones où les grains sont les mieux séparés, afin de faciliter par la suite la détermination du facteur de forme. Sur chaque grain de chaque image sont mesurées la plus grande dimension apparente, appelée longueur *L,* et la plus petite dimension apparente, appelée *W.* De préférence, ces dimensions sont mesurées à l'aide d'un logiciel de traitement d'images, comme par exemple VISILOG commercialisé par la société NOESIS. Pour chaque grain, le facteur de forme R = *L*/*W* est calculé. La distribution du facteur de forme de la poudre peut ensuite être déterminée à partir de l'ensemble des mesures de facteur de forme R réalisées.

Sauf indication contraire, toutes les teneurs en oxydes des grains selon l'invention sont des pourcentages massiques exprimés sur la base des oxydes.

### Brève description des figures

D'autres caractéristiques et avantages de l'invention apparaîtront encore à la lecture de la description qui va suivre et à l'examen du dessin annexé dans lequel la figure 1 représente schématiquement en coupe une pile à combustible à oxyde solide (SOFC) selon l'invention.

### Description détaillée d'un mode de réalisation de l'invention

Une poudre selon invention peut être fabriquée suivant un procédé général comportant les étapes a) à d).

A l'étape a), la charge de départ est adaptée pour que le procédé conduise, à l'issue de l'étape c) ou d), à une poudre selon l'invention présentant éventuellement une ou plusieurs des caractéristiques optionnelles décrites ci-dessus.

L'oxyde d'yttrium peut être ajouté séparément de l'oxyde de zirconium dans la charge de départ. On peut également ajouter, dans la charge de départ, de l'oxyde de zirconium dopé à l'oxyde d'yttrium.

Dans µm premier mode de réalisation particulier, ZrO₂, Y₂O₃, Al₂O₃ et TiO₂ sont ajoutés dans la charge de départ sous la forme de poudres de ZrO₂, de Y₂O₃, de Al₂O₃, et de TiO₂, respectivement.

Dans un deuxième mode de réalisation particulier et avantageux, on utilise du sable de zircon naturel ZrSiO₄ titrant environ 66 % de ZrO₂ et 33 % de SiO₂, les impuretés du zircon comportant classiquement des précurseurs de AlO₃ et TiO₂, L'ajustement de la composition chimique finale recherchée peut s'effectuer par ajout de poudres de ZrO₂, de Y₂O₃, de Al₂O₃, de TiO₂ et/ou de leurs précurseurs. Dans ce mode de réalisation particulier, la fusion est réalisée dans des conditions réductrices, par exemple par ajout de coke dans la charge de départ, de façon à éliminer la silice amenée par le zircon. L'homme du métier sait comment adapter les paramètres de fusion en conséquence.

L'ajustement des compositions peut se faire par addition d'oxydes purs ou de mélanges d'oxydes, notamment ZrO₂, Y₂O₃, Al₂O₃ et TiO₂.

Selon l'invention, l'homme du métier ajuste la composition de la charge de départ de manière à obtenir, à l'issue de l'étape c), un produit présentant la composition d'une poudre conforme à l'invention. Par exemple l'homme du métier sait comment adapter la composition de la charge de départ pour tenir compte de l'introduction de faibles quantités d'oxydes, comme par exemple Al₂O₃ et TiO₂.

Bien que l'alumine et l'oxyde de titane puissent être présents à titre d'impuretés dans des matières premières, il convient de sélectionneur les matières premières afin d'assurer que les grains de la poudre fabriquée présentent systématiquement des teneurs en alumine et en oxyde de titane conformes à l'invention.

Les oxydes ZiO₂, Y₂O₃, Al₂O₃, TiO₂ et leurs précurseurs constituent de préférence, avec les impuretés, plus de 90%, plus de 95%, plus de 99%, de préférence 100% de la masse de la charge de départ. De préférence, les impuretés sont telles que, en pourcentages en masse sur la base des oxydes de la charge de départ :
- CeO₂ < 0,5%, de préférence la teneur en CeO₂ est inférieure à 0,3%, de préférence inférieure à 0,1%, et/ou
- Na₂O < 0,3%, de préférence la teneur en Na₂O est inférieure à 0,2%, de préférence inférieure à 0,1%, de préférence encore inférieure à 0,05%, et/ou
- Fe₂O₃ ≤ 0,2%, de préférence Fe₂O₃ < 0,1%, et/ou
- CaO < 0,2%, de préférence la teneur en CaO est inférieure à 0,1%, de préférence encore inférieure à 0,05% et/ou
- MgO < 0,2%, de préférence la teneur en MgO est inférieure à 0,1%, de préférence encore inférieure à 0,05%.

Les impuretés peuvent également comporter du carbone ou de l'oxyde de manganèse.

A l'étape b), on peut notamment utiliser un four par induction, une torche à plasma, un four à arc ou un laser. De préférence on utilise un four à arc ou à induction. Avantageusement, il est ainsi possible d'obtenir de grandes quantités de produit, de façon industrielle.

A l'étape b), la fusion est de préférence effectuée en conditions oxydantes si la charge de départ ne contient pas de sable de zircon, ou en conditions réductrices si la charge de départ contient du sable de zircon.

L'étape c) peut être effectuée, complètement ou partiellement, en conditions, oxydantes ou en conditions réductrices. De préférence, l'étape c) est effectuée en conditions oxydantes, de préférence sous air.

A l'étape d), le produit fondu issu de l'étape c) peut être broyé. La granulométrie du produit broyé est adaptée en fonction de sa destination,

Le broyage peut s'effectuer dans différents types de broyeurs, comme un broyeur à jet d'air ou un broyeur à rouleaux. Lorsqu'une poudre présentant des grains de forme allongée est recherchée, un broyeur à rouleaux sera de préférence utilisé.

Le cas échéant, les grains broyés subissent une opération de sélection granulométrique, par exemple par tamisage.

L'invention concerne aussi un premier procédé de fabrication particulier comportant les étapes a), b) décrites ci-dessus dans le cadre du procédé de fabrication général, et notées, pour ce premier procédé, « a₁) » et « b₁) », respectivement, et une étape c) comportant les étapes suivantes :
c₁') dispersion de la matière en fusion sous forme de gouttelettes liquides,
c₁") solidification de ces gouttelettes liquides par contact avec un fluide, de manière à obtenir des grains fondus.

Par simple adaptation de la composition de la charge de départ, des procédés de dispersion classiques, en particulier par soufflage, centrifugation ou atomisation, permettent ainsi de fabriquer, à partir d'une matière en fusion, des grains selon l'invention, sous la forme de billes.

Un premier procédé de fabrication particulier peut encore comporter une, voire plusieurs, des caractéristiques optionnelles du procédé de fabrication général listées ci-dessus.

Dans un mode de réalisation, les étapes de dispersion c₁') et de solidification c₁") sont sensiblement simultanées, les moyens mis en oeuvre pour la dispersion provoquant un refroidissement de la matière en fusion. Par exemple, la dispersion peut résulter d'un soufflage de gaz à travers la matière à fusion, la température dudit gaz étant adaptée à la vitesse de solidification souhaitée.

L'invention se rapporte encore à un deuxième procédé de fabrication particulier comportant les étapes a), b) et d) décrites ci-dessus dans le cadre du procédé de fabrication général, et notées, pour ce deuxième procédé de fabrication particulier, « a₂) » et « b₂) », respectivement, et une étape c) comportant les étapes suivantes :
c₂') coulage de ladite matière en fusion dans un moule ;
c₂") solidification par refroidissement de la matière collée dans le moule jusqu'à obtention d'un bloc au moins en partie, voire totalement solidifié ;
c₂"') démoulage du bloc.

Ce deuxième procédé de fabrication particulier peut encore comporter une, voire plusieurs, des caractéristiques optionnelles de procédé de fabrication général listées ci-dessus.

Dans un mode de réalisation particulier, à l'étape c₂'), on utilise un moule autorisant un refroidissement rapide. En particulier, il est avantageux d'utiliser un moule apte à former un bloc sous la forme d'une plaque, et, de préférence, un moule tel que décrit dans US 3,993,119.

Les premier et deuxième procédés particuliers sont des procédés industriels permettant de fabriquer de grandes quantités de produits, avec de bons rendements.

Bien entendu d'autres procédés que ceux décrits ci-dessus pourraient être envisagés pour fabriquer une poudre selon l'invention.

Une poudre selon l'invention peut en particulier être utilisée pour fabriquer un cermet selon l'invention, notamment une anode et une couche active d'anode, par exemple en suivant un procédé comportant les étapes A) à D) :
A l'étape A), la charge de départ peut contenir entre 30% et 70 % de particules d'oxyde de nickel NiO ou d'oxyde de cobalt CoO, en pourcentage massique de la charge de départ, et/ou une quantité équivalent (c'est-à-dire conduisant à la même quantité de NiO ou de CoO) d'un ou plusieurs précurseurs de ces oxydes, le complément étant de préférence uniquement une poudre selon l'invention. La taille médiane de la poudre de particules d'oxyde de nickel ou d'oxyde de cobalt peut être comprise entre 0,3 et 15 µm, voire entre 3 µm et 10 µm.
A l'étape B), la poudre peut être mise sous une forme quelconque, notamment sous la forme d'une couche étant possible.
A l'étape C), la poudre mise en forme est frittée, suivant des techniques de frittage classiques, de préférence par pressage à chaud.
A l'étape D), la réduction conduit à une transformation d'au moins une partie des oxydes NiO et CoO en Ni et Co, respectivement. A cet effet, la préforme issue de l'étape C) est soumise à un environnement réducteur. Par exemple, elle peut être mise en contact avec un fluide réducteur comme un gaz hydrogéné.

Ledit fluide réducteur comporte de préférence au moins 4%, de préférence au moins 20%, voire au moins 50%, en volume d'hydrogène (H₂).

Dans un mode de réalisation particulier, les étapes C) et D) sont simultanées. Le frittage est alors effectué dans un environnement réducteur.

A l'issue de l'étape D), on obtient un cermet fritté selon l'invention.

Le cermet fritté selon l'invention peut présenter une porosité totale élevée, typiquement supérieure à 20% et/ou inférieure à 70%.

### EXEMPLES

Les exemples non limitatifs suivants sont donnés dans le but d'illustrer l'invention.

On prépare une charge de départ constituée de particules de zircone, d'oxyde d'yttrium, d'alumine et d'oxyde de titane et/ou de précurseurs de ces oxydes, en fonction du produit à fabriquer. On la fait ensuite fondre dans un four électrique à arc de type Héroult, de manière à obtenir une matière en fusion.

La matière en fusion est alors coulée sous la forme d'un filet, puis dispersée en billes par soufflage d'air comprimé.

Les billes sont ensuite broyées dans un broyeur à rouleaux.

La poudre ainsi obtenue est ensuite tamisée avec application d'ultrasons, de façon à sélectionner l'entre-tamis 25-45 µm pour les poudres des exemples 1 à 14 ou le passant au tamis de 25 µm pour les poudres des exemples 15 et 16.

Un disque poreux de 28 mm de diamètre et de 2 mm d'épaisseur est ensuite fabriqué à partir de chacune des poudres obtenues, par pressage à froid uniaxial à une pression de 69 MPa. Les disques ainsi obtenus subissent un pressage à chaud sous air à 1320°C, avec une pression maximale de 7 MPa appliquée pendant 30 minutes.

Le tableau 1 ci-dessous récapitule l'ensemble des propriétés, mesurées sur les disques poreux, notamment la résistance mécanique en flexion biaxiale (« biaxial flexure strength ») mesurée suivant la norme ASTM Cl499, avec Dₛ = 20 mm, D_{L} = 9,5 mm, une vitesse lors de l'essai de 0,508 mm/min et un coefficient de Poisson égal à 0,22, et la porosité totale mesurée par la méthode de la poussée d'Archimède.

**Tableau 1**

| | | 1(*) | 2(*) | 3 | 4 | 5 | 6 | 7 | 8 | 9 | 10 | 11(*) | 12(*) | 13(*) | 14(*) | 15(*) | 16 |
|---|---|---|---|---|---|---|---|---|---|---|---|---|---|---|---|---|---|
| **Caractéristique de la poudre** | | | | | | | | | | | | | | | | | |
| %ZrO₂+HfO₂ | | 83,251 | 83.05 | 83,26 | 83,26 | 82,88 | 82,46 | 82,63 | 82,58 | 82,46 | 82,36 | 82,53 | 82,36 | 82,16 | 81,93 | 83,251 | 82,88 |
| %Y₂O₃ | | 16,7 | 16.7 | 16.4 | 16,3 | 16,6 | 17.1 | 16,8 | 16,7 | 16,7 | 16,6 | 16,7 | 16.8 | 16,8 | 16,6 | 16,7 | 16,6 |
| %Al₂O₃ | | 0,0055 | 0,026 0,13 | | 0,26 | 0,32 | 0,38 | 0,47 | 0,48 | 0,64 | 0,7 | 0,68 | 0,78 | 0,9 | 1,26 | 0,0055 | 0,32 |
| %TiO₂ | | 0,0015 | 0,18 | 0,16 | 0,13 | 0,13 | 0,002 | 0,025 | 0,1 | 0,14 | 0,25 | 0,024 | 0,002 | 0,056 | 0,15 | 0,0015 | 0,13 |
| %SiO₂ | | 0,01 | 0,01 | <0,02 | <0,02 | 0,02 | <0,02 | 0,02 | 0,09 | 0,01 | 0,05 | 0,013 | <0,02 | 0,024 | 0,01 | 0,01 | 0,02 |
| % impuretés | | 0,032 | 0,034 | 0,03 | 0,03 | 0,05 | 0,038 | 0,055 | 0,05 | 0,05 | 0,04 | 0,053 | 0,038 | 0,06 | 0.05 | 0,032 | 0,05 |
| Granulométrie après tamisage (microns) | D₉₀ | 69,7 | 67 | 66,9 | 67,1 | 73,8 | 65,7 | 66,9 | 67 | 64,4 | 68,6 | 68,1 | 66,6 | 71,1 | 68 | 31,2 | 25,4 |
| | D₅₀ | 44,9 | 42,7 | 42,8 | 43 | 43,2 | 40,4 | 42,3 | 40,4 | 39,9 | 43,1 | 43,6 | 40,3 | 44,6 | 43 | 18,4 | 14,9 |
| | D₁₀ | 28,7 | 26,5 | 26,3 | 26,9 | 26,7 | 22,6 | 26,1 | 21,4 | 23,7 | 26,4 | 27,4 | 23,5 | 27,9 | 26,3 | 9,5 | 7,9 |

| **Caractéristiques mesurées sur les disques poreux** | | | | | | | | | | | | | | | | | |
|---|---|---|---|---|---|---|---|---|---|---|---|---|---|---|---|---|---|
| Porosité ouverte (%) | | 37 | 37,8 | 38,3 | 39,3 | 37,8 | 38,2 | 38,5 | 38,8 | 38,2 | 39,9 | 38,9 | 36,9 | 38,7 | 37,9 | 35 | 37,6 |
| résistance mécanique en flexion biaxiale (MPa) | | 3,6 | 6,5 | 11,2 | 11 | 10,7 | 8,8 | 8,7 | 9,8 | 8,7 | 8,8 | 6,9 | 8,1 | 6,4 | 7,6 | 16,6 | 17 |

| | | | | | | | | | | | | | | | | | |
|---|---|---|---|---|---|---|---|---|---|---|---|---|---|---|---|---|---|
| (*) : hors invention | | | | | | | | | | | | | | | | | |

Les inventeurs considèrent qu'un bon compromis est atteint lorsqu'après mise en forme et frittage d'une poudre correspondant à l'entre tamis 25 - 45 µm, obtenue par tamisage avec application d'ultrasons :
- la porosité ouverte est supérieure ou égale à 37,5%, de préférence supérieure à 38%, et
- la résistance mécanique en flexion biaxiale mesurée suivant la norme ASTM C1499 est supérieure ou égal à 8 MPa, de préférence supérieure à 9 MPa, voire supérieure à 10 MPa, voire supérieure à 11 MPa.

Les exemples montrent qu'un bon compromis est atteint pour les produits réalisés à partir des poudres selon l'invention.

### Poudres des exemples 1 à 14 (correspondant à l'entre tamis 25 - 45 µm, et obtenues par tamisage avec application d'ultrasons)

La comparaison des exemples 2 et 3 montre l'effet très positif d'un faible ajout d'alumine. Une teneur en alumine inférieure à 0,07% ne permet cependant pas d'atteindre le compromis visé, même avec une teneur en TiO₂ de 0,18%.

La comparaison des exemples 3 à 5 et 9 et 14 (teneur en titane sensiblement constante) montre qu'une quantité trop élevée d'alumine a un effet négatif. En particulier, l'exemple 14, hors invention, montre que pour une teneur en alumine de 1,26%, une teneur en TiO₂ supérieure à 0,15 est nécessaire pour atteindre le compromis.

La comparaison des exemples 9 et 11 montre que l'effet négatif d'une teneur trop élevée en alumine peut être compensé par un ajout d'oxyde de titane. Les exemples 12 et 11, hors invention, montrent cependant qu'une teneur en alumine respectivement de 0,78% et de 0,68% associée à une faible valeur de TiO₂ ne permet pas d'atteindre le compromis visé. La comparaison des exemples 10 et 11 confirme la nécessité d'un ajout d'oxyde de titane si la quantité d'alumine est élevée.

C'est pourquoi, selon l'invention, 0,5.Al₂O₃ - 0,3% ≤ TiO₂ si 0,6% < Al₂O₃. Selon l'invention, la teneur en alumine doit également être inférieure ou égale à 1,8%.

Les exemples 6, 7 et 8 (et notamment une comparaison de ces deux derniers exemples) illustrent également l'intérêt d'un ajout d'oxyde de titane lorsque la teneur en alumine est inférieure à 0,6%. Les exemples 6 et 7 montrent en particulier qu'une teneur en alumine respectivement égale à 0,38% et 0,47% associée à une faible valeur en TiO₂ permet d'atteindre le compromis visé.

L'exemple 13, hors invention, montre que pour une teneur en alumine de 0,9%, une teneur en TiO₂ supérieure à 0,056% est nécessaire pour atteindre le compromis visé.

Les exemples 3 à 5 sont les exemples préférés.

### Poudres des exemples 15 et 16 (correspondant au passant au tamis de 25 µm, obtenues par tamisage avec application d'ultrasons)

L'exemple 16 montre que le compromis visé est également atteint pour cette granulométrie.

Bien entendu, la présente invention n'est pas limitée aux modes de réalisation décrits, fournis à titre illustratif.

## Revendications

1. Poudre de grains fondus de zircone yttriée, lesdits grains présentant l'analyse chimique suivante, en pourcentage massique sur la base des oxydes :
- ZrO₂ + HfO₂ : complément à 100%, la teneur en HfO₂ étant inférieure à 2,0% ;
- 11,8% ≤ Y₂O₃ ≤ 18,6% ;
- 0,07% ≤ Al₂O₃ ≤ 1,8% ;
- TiO₂ ≤ 0,6%, pourvu que 0,5.Al₂O₃ - 0,3% ≤ TiO₂ si 0,6% < Al₂O₃ ;
- Autres oxydes : ≤ 2,0%.

2. Poudre de grains fondus selon la revendication précédente, dans laquelle
- la teneur en Y₂O₃ est supérieure à 12,7% et inférieure à 17,8% ; et/ou
- la teneur en Al₂O₃ est inférieure à 1,5% ; et/ou
- la teneur en TiO₂ est inférieure à 0,4% et supérieure à 0,01%, et/ou
- la teneur en « autres oxydes » est inférieure à 1 %.

3. Poudre de grains fondus selon l'une quelconque des revendications précédentes, dans laquelle
- la teneur en Y₂O₃ est supérieure à 13,5% et inférieure à 16,9% ; et/ou
- la teneur en Al₂O₃ est inférieure à 0,9% ; et/ou
- la teneur en TiO₂ est inférieure à 0,3% et supérieure à 0,1%
- la teneur en « autres oxydes » est inférieure à 0,5%.

4. Poudre de grains fondus selon l'une quelconque des revendications précédentes, dans laquelle
- la teneur en Al₂O₃ est inférieure à 0,5% et supérieure à 0,1% ; et/ou
- la teneur en TiO₂ est inférieure à 0,2% et supérieure à 0,1% ; et/ou
- la teneur en « autres oxydes » est inférieure à 0,2%.

5. Poudre de grains fondus selon l'une quelconque des revendications précédentes, dans laquelle le percentile 90, D₉₀ des grains de la poudre, est inférieur à 200 µm.

6. Poudre de grains fondus selon l'une quelconque des revendications précédentes, dans laquelle plus de 40 % des grains de la poudre, en pourcentages en nombre, présentent un facteur de forme R supérieur à 1,5, le facteur de forme d'un grain étant le rapport *L*/*W* entre la longueur *L* et la largeur *W* dudit grain.

7. Poudre de grains fondus selon la revendication précédente, dans laquelle plus de 70 % des grains de la poudre, en pourcentages en nombre, présentent un facteur de forme R supérieur à 1,5.

8. Poudre de grains fondus selon l'une quelconque des revendications précédentes, dans laquelle la distribution du facteur de forme R est telle que :
- moins de 90 % des grains de la poudre présentent un facteur de forme R supérieur à 1,5, et/ou
- plus de 10 % et moins de 60 % des grains de la poudre présentent un facteur de forme R supérieur à 2, et/ou
- plus de 5 % et moins de 40 % des grains de la poudre présentent un facteur de forme R supérieur à 2,5, et/ou
- plus de 2 % et moins de 20 %des grains de la poudre présentent un facteur de forme R supérieur à 3, les pourcentages étant des pourcentages en nombre.

9. Poudre de grains fondus selon l'une quelconque des revendications précédentes, dans laquelle la distribution du facteur de forme R est telle que :
- la distribution du facteur de forme R est telle que :
- moins de 80 % des grains de la poudre présentent un facteur de forme R supérieur à 1,5, et/ou
- plus de 20 % et moins de 40 % des grains de la poudre présentent un facteur de forme R supérieur à 2, et/ou
- plus de 10 % et moins de 20 % des grains de la poudre présentent un facteur de forme R supérieur à 2,5, et/ou
- plus de 5 % et moins de 10 % des grains de la poudre présentent un facteur de forme R supérieur à 3, les pourcentages étant des pourcentages en nombre.

10. Cermet fritté obtenu par frittage d'une charge de départ comportant une poudre selon l'une quelconque des revendications 1 à 9.

11. Electrode comportant un cermet fritté selon la revendication précédente.

12. Procédé de fabrication d'une poudre selon l'une quelconque des revendications 1 à 9, comportant les étapes successives suivantes :
a) mélange de matières premières particulaires apportant ZrO₂, Y₂O₃, Al₂O₃, et optionnellement TiO₂, et/ou un ou plusieurs précurseurs de ces oxydes pour former une charge de départ, adaptée de manière que, à l'issue de l'étape c), le produit présente une composition conforme à celle des grains d'une poudre selon l'une quelconque des revendications 1 à 9,
b) fusion de la charge de départ jusqu'à obtention d'une matière en fusion,
c) refroidissement jusqu'à solidification complète de ladite matière en fusion de manière à obtenir un produit fondu,
d) optionnellement, et en particulier si le produit fondu n'est pas une poudre selon l'invention, broyage dudit produit fondu.

## Patentansprüche

1. Pulver von geschmolzenen Körnern aus yttriiertem Zirkon oxid, wobei die besagten Körner die folgende chemische Analyse aufweisen, in Gewichtsprozenten auf Basis der Oxide:
- ZrO₂ + HfO₂ : Komplement zu 100%, wobei der Gehalt an HfO₂ geringer als 2,0% ist;
- 11,8% ≤ Y₂O₃ ≤ 18,6%;
- 0,07% ≤ Al₂O₃ ≤ 1,8%;
- TiO₂ ≤ 0,6%, vorausgesetzt dass 0,5.Al₂O₃ - 0,3% ≤ TiO₂ wenn 0,6% < Al₂O₃;
- Andere Oxide: ≤ 2,0%.

2. Pulver von geschmolzenen Körnern nach dem vorhergehenden Anspruch, wobei
- Der Gehalt an Y₂O₃ größer ist als 12,7% und geringer ist als 17,8%; und/oder
- Der Gehalt an Al₂O₃ geringer ist als 1,5%; und/oder
- Der Gehalt an TiO₂ geringer ist als 0,4% und größer ist als 0,01%, und/oder
- Der Gehalt an "anderen Oxiden" geringer ist als 1%.

3. Pulver von geschmolzenen Körnern nach einem der vorhergehenden Ansprüche, wobei
- Der Gehalt an Y₂O₃ größer ist als 13,5% und geringer ist als 16,9%; und/oder
- Der Gehalt an Al₂O₃ geringer ist als 0,9%; und/oder
- Der Gehalt an TiO₂ geringer ist als 0,3% und größer ist als 0,1%
- Der Gehalt an "anderen Oxiden" geringer ist als 0,5%.

4. Pulver von geschmolzenen Körnern nach einem der vorhergehenden Ansprüche, wobei
- Der Gehalt an Al₂O₃ geringer ist als 0,5% und größer ist als 0,1%; und/oder
- Der Gehalt an TiO₂ geringer ist als 0,2% und größer ist als 0,1%; und/oder
- Der Gehalt an "anderen Oxiden" geringer ist als 0,2%.

5. Pulver von geschmolzenen Körnern nach einem der vorhergehenden Ansprüche, wobei die 90 Perzentile, D₉₀ der Körner des Pulvers, geringer als 200 µm ist.

6. Pulver von geschmolzenen Körnern nach einem der vorhergehenden Ansprüche, wobei mehr als 40 % der Körner des Pulvers, in Prozentangaben in Zahlen, einen Formfaktor R größer als 1,5 aufweisen, wobei der Formfaktor eines Korns das Verhältnis *L*/*W* zwischen der Länge L und der Breite W des besagten Korns ist.

7. Pulver von geschmolzenen Körnern nach dem vorhergehenden Anspruch, wobei mehr als 70 % der Körner des Pulvers, in Prozentangaben in Zahlen, einen Formfaktor R größer als 1,5 aufweisen.

8. Pulver von geschmolzenen Körnern nach einem der vorhergehenden Ansprüche, wobei die Verteilung des Formfaktors R so ist dass :
- weniger als 90 % der Körner des Pulvers einen Formfaktor R größer als 1,5 aufweisen, und/oder
- mehr als 10 % und weniger als 60 % der Körner des Pulvers einen Formfaktor R größer als 2 aufweisen, und/oder
- mehr als 5 % und weniger als 40 % der Körner des Pulvers einen Formfaktor R größer als 2,5 aufweisen, und/oder
- mehr als 2 % und weniger als 20 % der Körner des Pulvers einen Formfaktor R größer als 3 aufweisen, wobei die Prozentangaben Prozentangaben in Zahlen sind.

9. Pulver von geschmolzenen Körnern nach einem der vorhergehenden Ansprüche, wobei die Verteilung des Formfaktors R so ist dass :
- die Verteilung des Formfaktors R so ist dass :
- weniger als 80 % der Körner des Pulvers einen Formfaktor R größer als 1,5 aufweisen, und/oder
- mehr als 20 % und weniger als 40 % der Körner des Pulvers einen Formfaktor R größer als 2 aufweisen, und/oder
- mehr als 10 % und weniger als 20 % der Körner des Pulvers einen Formfaktor R größer als 2,5 aufweisen, und/oder
- mehr als 5 % und weniger als 10 % der Körner des Pulvers einen Formfaktor R größer als 3 aufweisen, wobei die Prozentangaben Prozentangaben in Zahlen sind.

10. Gesintertes Cermet erhalten durch Sintern einer Ausgangscharge enthaltend ein Pulver nach einem der vorhergehenden Ansprüche 1 bis 9.

11. Elektrode enthaltend ein gesintertes Cermet nach dem vorhergehenden Anspruch.

12. Verfahren der Produktion eines Pulvers nach einem der vorhergehenden Ansprüche 1 bis 9, enthaltend die folgenden aufeinanderfolgenden Schritte:
a) Mischen der ersten partikulären Materien, die ZrO₂, Y₂O₃, Al₂O₃, und optional TiO₂ liefern, und/oder ein oder mehrere Vorläufer von diesen Oxiden um eine Ausgangscharge zu bilden, so angepasst, dass, zum Ende des Schrittes c), das Proukt eine Zusammensetzung aufweist entsprechend derjenigen der Körner eines Pulvers nach einem der Ansprüche 1 bis 9,
b) Schmelzen der Ausgangscharge bis zum Erhalt einer schmelzflüssigen Materie,
c) Erkalten bis zum kompletten Erstarren der besagten schmelzflüssigen Materie um ein geschmolzenes Produkt zu erhalten,
d) Optional, und insbesondere wenn das geschmolzene Produkt nicht ein erfindungsgemäßes Pulver ist, Zerkleinern des besagten geschmolzenen Produktes.

## Claims

1. A powder formed of fused grains of zirconia comprising yttrium, said grains exhibiting the following chemical analysis, as percentage by weight on the basis of the oxides:
- ZrO₂ + HfO₂: remainder to 100%, the content of HfO₂ being less than 2.0%;
- 11.8% ≤ Y₂O₃ ≤ 18.6%;
- 0.07% ≤ Al₂O₃ ≤ 1.8%;
- TiO₂ < 0.6%, provided that 0.5 x Al₂O₃ - 0.3% ≤ TiO₂ if 0.6% < Al₂O₃;
- other oxides: ≤ 2.0%.

2. The powder formed of fused grains as claimed in the preceding claim, in which:
- the Y₂O₃ content is greater than 12.7%, and less than 17.8%; and/or
- the Al₂O₃ content is less than 1.5%; and/or
- the TiO₂ content is less than 0.4% and greater than 0.01%; and/or
- the content of "other oxides" is less than 1%.

3. The powder formed of fused grains as claimed in either one of the preceding claims, in which:
- the Y₂O₃ content is greater than 13.5% and less than 16.9%; and/or
- the Al₂O₃ content is less than 0.9%; and/or
- the TiO₂ content is less than 0.3% and greater than 0.1%;
- the content of "other oxides" is less than 0.5%.

4. The powder formed of fused grains as claimed in any one of the preceding claims, in which:
- the Al₂O₃ content is less than 0.5% and greater than 0.1%; and/or
- the TiO₂ content is less than 0.2% and greater than 0.1%; and/or
- the content of "other oxides" is less than 0.2%.

5. The powder formed of fused grains as claimed in any one of the preceding claims, in which the 90 percentile, D₉₀, of the grains of the powder is less than 200 µm.

6. The powder formed of fused grains as claimed in any one of the preceding claims, in which more than 40% of the grains of the powder, as percentage by number, exhibit an aspect ratio R of greater than 1.5, the aspect ratio of the grain being the ratio *L*/*W* between the length *L* and the width *W* of said grain.

7. The powder formed of fused grains as claimed in the preceding claim, in which more than 70% of the grains of the powder, as percentage by number, exhibit an aspect ratio R of greater than 1.5.

8. The powder formed of fused grains as claimed in any one of the preceding claims, in which the distribution of the aspect ratio R is such that:
- less than 90% of the grains of the powder exhibit an aspect ratio R of greater than 1.5, and/or
- more than 10% and less than 60% of the grains of the powder exhibit an aspect ratio R of greater than 2, and/or
- more than 5% and less than 40% of the grains of the powder exhibit an aspect ratio R of greater than 2.5, and/or
- more than 2% and less than 20% of the grains of the powder exhibit an aspect ratio R of greater than 3, the percentages being percentages by number.

9. The powder formed of fused grains as claimed in any one of the preceding claims, in which the distribution of the aspect ratio R is such that:
- less than 80% of the grains of the powder exhibit an aspect ratio R of greater than 1.5, and/or
- more than 20% and less than 40% of the grains of the powder exhibit an aspect ratio R of greater than 2, and/or
- more than 10% and less than 20% of the grains of the powder exhibit an aspect ratio R of greater than 2.5, and/or
- more than 5% and less than 10% of the grains of the powder exhibit an aspect ratio R of greater than 3, the percentages being percentages by number.

10. A sintered cermet obtained by sintering a feedstock comprising a powder as claimed in any one of claims 1 to 9.

11. An electrode comprising the sintered cermet as claimed in the preceding claim.

12. A process for the manufacture of a powder as claimed in any one of claims 1 to 9, comprising the following successive stages:
a) mixing particulate starting materials contributing ZrO₂, Y₂O₃, Al₂O₃, and optionally TiO₂, and/or one or more precursors of these oxides, in order to form an appropriate feedstock so that, on conclusion of stage c), the product exhibits a composition in accordance with that of the grains of a powder as claimed in any one of claims 1 to 9,
b) melting the feedstock until a molten material is obtained,
c) cooling until said molten material has completely solidified, so as to obtain a fused product,
d) optionally, in particular if the fused product is not a powder according to the invention, grinding said fused product.
